# EUROPEAN PATENT SPECIFICATION

(11) **EP 3 493 094 B1**
(45) Date of publication and mention of the grant of the patent: **13.11.2024**
(21) Application number: 17858623.6
(22) Date of filing: 13.09.2017
(51) Int. Cl.: G06F 21/62, G06F 21/60, G06F 12/14, G06F 16/174, G06F 16/176, G06F 21/53, G06F 21/56

(54) **ELECTRONIC DEVICE AND CONTROL METHOD THEREFOR**
ELEKTRONISCHE VORRICHTUNG UND STEUERUNGSVERFAHREN DAFÜR
DISPOSITIF ÉLECTRONIQUE ET SON PROCÉDÉ DE COMMANDE

(30) Priority: 05.10.2016 KR 20160128605
(43) Date of publication of application: 05.06.2019
(73) Proprietor: Samsung Electronics Co., Ltd., Suwon-si, Gyeonggi-do 16677 (KR)
(72) Inventor: JEONG, Dong-hwa, Suwon-si, Gyeonggi-do 16620 (KR); LEE, Sung-gyu, Suwon-si, Gyeonggi-do 16536 (KR); LEE, Wang-seok, Seongnam-si, Gyeonggi-do 13504 (KR); PARK, Hyun-cheol, Yongin-si, Gyeonggi-do 16811 (KR)
(74) Representative: Appleyard Lees IP LLP
(86) International application number: PCT/KR2017/010058
(87) International publication number: WO 2018/066828

(56) References cited:
- WO-A1-01/01252
- JP-A- 2004 252 742
- JP-A- 2008 219 802
- KR-A- 20160 014 518
- US-A1- 2013 152 085
- US-A1- 2015 106 946
- US-B1- 9 286 310
- US-B1- 9 424 058

## Description

### TECHNICAL FIELD

The disclosure relates to an electronic device and a control method thereof, in which a file usable in common on a system employing at least one virtual device is shared between the virtual devices, and the shared file is protected from the outside.

### BACKGROUND ART

A virtual device is virtually generated in one electronic device by not a physical method but a logical method, and refers to a virtual environment that looks as if independent programs are executed.

The virtual device refers to technology which directly shares an operating system and general program files present in the electronic device and redirects only results of a program executed in the virtual device or its action to a virtualized area.

The virtual device is built as a virtual CD-ROM, a virtual desktop computer or the like virtual driver or system in a personal computer, etc. and performs an independent operation so that the result of the operation cannot have a direct effect on the system.

The virtual device may have a hypervisor structure to be executed based on a virtual operating system different from an operating system of an original system, and a container structure using the operating system of the original system. The container structure is advantageously lighter than the hypervisor structure in terms of an operation share of a processor because there are no needs of storing and actualizing additional data to realize a separate operating system and hardware emulating is not necessary. Further, when the virtual device is actualized by the container structure, a file shared by the virtual device may be designated and used as a shared file in order to prevent a storage space from being wasted.

However, when such a shared file is modulated a hacked virtual device, the other virtual devices refer to the modulated file and thus a problem arises in security. Accordingly, there is a problem with protection of the electronic device.

US 2013/152085 A1 discloses optimizing storage allocation in a virtual desktop environment. US 2015/106946 A1 describes secure client drive mapping and file storage system for mobile device management type security. US 9424058 B1 discloses file deduplication and scan reduction in a virtualization environment.

### DISCLOSURE

### TECHNICAL PROBLEM

Accordingly, an object of the disclosure is to solve the foregoing problems and provide an electronic device and a control method thereof, in which a shared file shared between virtual devices is more efficiently protected to improve security.

### TECHNICAL SOLUTION

According to an exemplary embodiment, there is provided an electronic device as defined by claim 1 of the claims appended hereto.

The alternative file is an exclusive file for the second virtual device.

The controller performs at least one of denying an access of the first virtual device to another shared file, interrupting the first virtual device, or initializing the first virtual device, when the shared file is modified by the first virtual device.

Further comprising a communicator, and the controller makes a request for restoring the modified shared file to an outside through the communicator, and creates the alternative file based on a restoration file received from the outside in response to the request, when the shared file is modified.

According to an exemplary embodiment, there is provided a method of controlling an electronic device as defined by claim 5 of the claims appended hereto.

The alternative file is an exclusive file for the second virtual device.

Further comprising performing at least one of denying an access of the first virtual device to another shared file, interrupting the first virtual device, or initializing the first virtual device, when the shared file is modified by the first virtual device.

Further comprising: making a request for restoring the modified shared file to an outside when the shared file is modified by the first virtual device; and creating the alternative file based on a restoration file received from the outside in response to the request.

### ADVANTAGEOUS EFFECTS

According to the disclosure, a shared file requested for modification by one virtual device is copied to create an alternative file, and the other virtual device is made to refer to a created alternative file, thereby more efficiently protecting the shared file, and improving security for electronic device.

### [DESCRIPTION OF DRAWINGS]

FIG. 1 illustrates an example of using an electronic device and a virtual device according to an embodiment of the disclosure.
FIG. 2 illustrates a hierarchy structure of an electronic device according to an embodiment of the disclosure.
FIG. 3 illustrates a plurality of virtual devices of sharing or exclusively using a file an embodiment of the disclosure.
FIG. 4 is a block diagram of an electronic device according to an embodiment of the disclosure.
FIG. 5 is a control flowchart of an electronic device according to an embodiment of the disclosure.
FIG. 6 is a control flowchart of an electronic device according to an embodiment of the disclosure.
FIG. 7 is a control flowchart of an electronic device according to an embodiment of the disclosure.
FIG. 8 is a control flowchart of an electronic device according to an embodiment of the disclosure.
FIG. 9 is a control flowchart of an electronic device according to an embodiment of the disclosure.
FIG. 10 is a control flowchart of an electronic device according to an embodiment of the disclosure.

### [BEST MODE]

Below, embodiments of the disclosure will be described in detail with reference to accompanying drawings. In the following descriptions of the embodiments, the matters illustrated in the accompanying drawings will be referred, and thus the same reference numerals or symbols given in the drawings refer to elements carrying out substantially the same function.

In the disclosure, an 'operating system' refers to system software that not only manages system hardware but also provides a system service in common with a hardware abstraction platform in order to execute an internal program of an electronic device. Further, the operating system serves to mediate between the program and the hardware of the electronic device. The operating system in the disclosure may be stored in a storage, executed by a processor, and configured to determine whether a program has access authority when the program tries accessing the virtual device, and allow or block the access.

In the disclosure. a 'virtual device' refers to a virtualized running environment created by abstracting a resource of an electronic device, and means a program running environment which is physically placed inside the electronic device but logically divided from the system of the electronic device. The kinds of virtual device may include advanced micro dynamics-virtualization (AMD-V), application program virtualization, a virtual machine, emulation, a quick emulator (QEMU), a hypervisor, a container, a nano-kernel, operating system virtualization, X86 virtualization, desktop virtualization, etc.

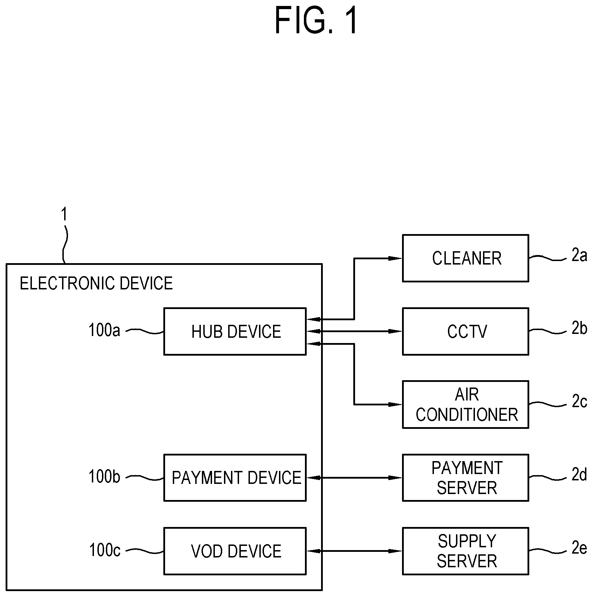

FIG. 1 illustrates an example of using an electronic device and a virtual device according to an embodiment of the disclosure. The electronic device 1 according to an embodiment of the disclosure may be actualized by a TV using an embedded system. According to an alternative embodiment of the disclosure, the electronic device 1 may be actualized by various devices utilizing a plurality of virtual devices, such as a tablet, a computer, a multimedia player, an electronic frame, a digital billboard, a large format display (LFD), a signage, a smart watch, a head-mount type display or the like wearable device, etc., but this is not construed as limiting the disclosure.

As shown in FIG. 1, the electronic device 1 according to an embodiment of the disclosure may be configured to create virtual devices 100a~100c to serve as a hub device 100a in an Internet-of-things (IoT) system where external electronic devices 2a~2c are connected through a network, a payment process device 100b capable of communicating with an external payment server 2d in a payment system, and a video-on-demand (VOD) device 100c performing various functions for communicating with a VOD supplying server 2e to provide a VOD service. The virtual devices 100a, 100b, and 100c may have various functions without being limited to the roles shown in the drawing. For example, according to another embodiment, the virtual devices 100a, 100b, and 100c may be created to actualize a virtual desktop, virtual data, a virtual storage, etc. of the electronic device 1.

The virtualization technology refers to technology of logically dividing (or combining) physical computer resources to efficiently utilize system resources. The virtual devices 100a, 100b, and 100c may refer to one of another virtual computer, another virtual server, another virtual desktop, and another virtual storage configured and created by software in the system. The virtualization technology involves only a hypervisor, or a binary and a library to make a virtual device 100 where a plurality of operating systems (OS) operates on actual system hardware, and uses a container or the like layer where the kernel or operating system of the system is shared. The virtual devices 100a, 100b, and 100c are isolated from each other, and configured not to allow an access to other virtual devices 100a, 100b, and 100c or a running environment area of the system.

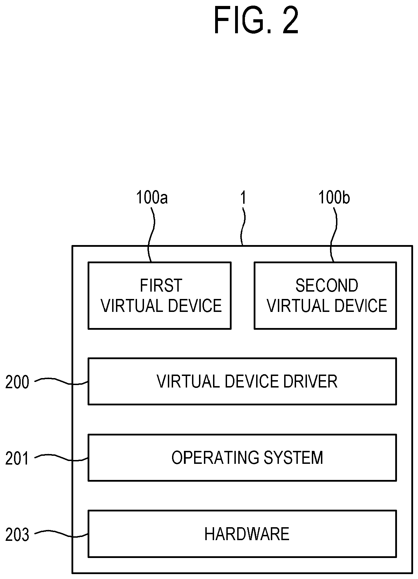

FIG. 2 illustrates a hierarchy structure of an electronic device according to an embodiment of the disclosure. The electronic device 1 according to an embodiment of the disclosure actualizes the virtual devices 100a and 100b with a container structure. Hardware 203 operates by an operating system 201. The plurality of virtual devices 100a and 100b is created by a virtual device driver 200, and shares the operating system 201. The operating system 201 is a program stored in a storage of the electronic device 1, executed by a controller 407 and mediating between general operations of the electronic device 1, and may include Windows, Mac, Linux, BSD, Unix, etc. The virtual device driver 200 is a program for performing functions related to the virtual devices 100a and 100b, such as creating the virtual devices 100a and 100b, sharing modification between the virtual devices 100a and 100b, etc. The hardware 203 executes the virtual device driver 200 through the operating system 201 and creates the virtual devices 100a and 100b. As virtualization running environments created by abstracting the resources of the electronic device 1, the virtual devices 100a and 100b refer to a program running environment which are physically located inside the electronic device 1 but logically divided from the operating system 201.

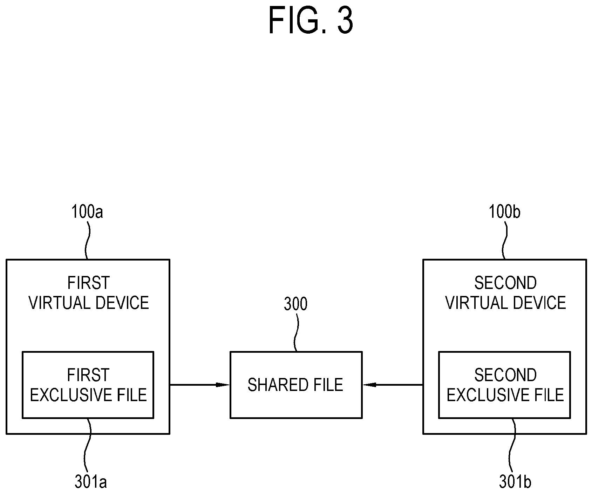

FIG. 3 illustrates the first virtual device 100a and the second virtual device 100b, a shared file 300 shared between the virtual devices 100a and 100b, and exclusive files 301a and 301b respectively corresponding to the virtual devices 100a and 100b. The virtual devices 100a and 100b share the operating system 201, and therefore use a shared system file, registry information, library, binary, etc. The electronic device 1 may make all the files used in common by the virtual devices 100a and 100b be shared due to a spatial limit of the storage. In the disclosure, a file shared between at least two virtual devices 100a and 100b will be called the shared file 300, and a file exclusively used by each of the virtual devices 100a and 100b will be called the exclusive files 301a and 301b. The shared file 300 is stored in a common area to which the plurality of virtual devices 100a and 100b can have an access, and the exclusive files 301a and 301b may be stored in an exclusive area to which only the matching virtual devices 100a and 100b can have an access. However, this description is not construed as limiting to the disclosure.

The virtual devices 100a, 100b, and 100c may be created to perform various roles such as the hub device 100a, the payment process device 100b, the VOD device 100c, etc. of the IOT system. In playing such roles, necessity for security may be increased. For example, when an external attack encroaches on the system and administration authority is given to the exterior, there may be problems that a CCTV of a user house may be controlled through the hub device 100a without permission, or a user's security information for payment stored in the payment process device 100b may be stolen and exploited.

Therefore, the electronic device 1 according to an embodiment of the disclosure may copy the shared file 300 to create an alternative file when at least one of the plurality of virtual devices 100a, 100b and 100c makes a request for modifying the shared file 300, and make the other virtual devices 100a, 100b, and 100c refer to the alternative file. With this, the shared file 300 not allowed to be modified is more efficiently protected to thereby improve security of the electronic device 1.

Below, elements of the electronic device 1 will be described with reference to the block diagram of the electronic device 1.

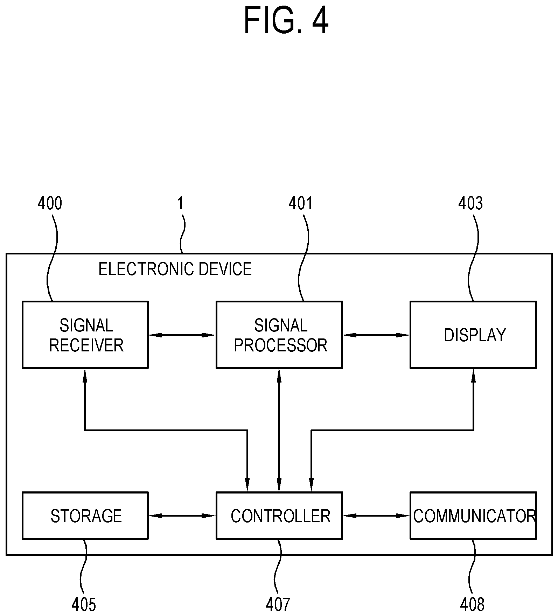

FIG. 4 is a block diagram of an electronic device according to an embodiment of the disclosure. The electronic device 1 includes a storage 405 and the controller 407. The electronic device 1 according to an embodiment of the disclosure may further include at least one of a signal receiver 400, a signal processor 401, a display 403 and a communicator 408. The elements of the electronic device 1 according to an embodiment of the disclosure shown in FIG. 4 are merely given as an example, and the electronic device 1 according to an embodiment of the disclosure may be actualized by other elements than the elements shown in FIG. 4. Further, each element may be actualized by a device, a software module, a circuit or a chip to carry out the described function.

The electronic device 1 may include the signal receiver 400 to receive an image signal. The signal receiver 400 may include a tuner. The tuner is tuned to a certain channel selected by a user among a plurality of channels and receives a broadcast signal of the selected channel. The signal receiver 400 may receive an image signal from a server through an image processing device such as a set-top box, a digital versatile disc (DVD) player, a personal computer (PC), etc. a mobile device such as a smart phone, or the Internet.

The signal processor 401 performs an imaging process with regard to an image signal received through the signal receiver 400 and makes the display 403 display an image based on the image signal subjected to the imaging process. The imaging process performed by the signal processor 401 may for example include de-multiplexing for dividing a transport stream including an image signal into sub streams such as video, audio and appended data; de-interlacing for converting an interlaced type of an image signal into a progressive type; scaling for adjusting a resolution for an image signal; noise reduction for improving image quality; detail enhancement; frame refresh rate conversion; etc.

The display 403 displays an image. There are no limits to the type of the display 403. For example, the display 403 may be actualized by various types such as liquid crystal, plasma, a light emitting diode, an organic light-emitting diode, a surface-conduction electron-emitter, a carbon nano-tube, nano-crystal, etc.

When the display 403 is of a liquid crystal type, the display 403 may include a liquid crystal display panel, a backlight unit for emitting light to the liquid crystal display panel, a panel driving substrate for driving the liquid crystal display panel, etc. The display 403 may be actualized by a self-emissive OLED panel without the backlight unit.

The electronic device 1 may additionally include a user command input unit. The user command input unit receives a user's input and delivers it to the controller 407. The user command input unit may be actualized in various forms according to methods of a user's input. For example, the user command input unit may be actualized by a menu button installed on the outer side of the electronic device 1, a remote control signal receiver for receiving a remote control signal of a user's input from a remote controller, a touch screen provided on the display 403 and receiving a user's touch input, a camera for sensing a user's gesture input, a microphone for recognizing a user's voice input, a sensor for sensing a user's motion, etc.

The communicator 408 is configured to communicate with an external device. The communicator 408 may be actualized in various types according to the types of the external device, the electronic device 1, etc. For example, the communicator 408 includes a connector for wired communication, and the connector may transmit/receive a signal/data in accordance with standards such as high definition multimedia interface (HDMI), high definition multimedia interface consumer electronics control (HDMI-CEC), universal serial bus (USB), Component, etc. To this end, the communicator 408 may include one or more connectors or terminals respectively corresponding to these standards. The communicator 408 may perform wired communication with a plurality of servers through a wired local area network (LAN).

Besides the connector or terminals for the wired communication, the communicator 408 may have various configurations in accordance with methods of designing the electronic device 1. As an example of various configurations, the communicator 408 may include a radio frequency (RF) circuit for transmitting/receiving an RF signal to perform wireless communication with an external device, and may be configured to perform one or more communications based on Wi-Fi, Bluetooth, Zigbee, Ultra-Wide Band (UWB), wireless USB, and near field communication (NFC) .

The storage 405 is configured to store various pieces of data of the electronic apparatus 1. The storage 405 stores the operating system 201 for mediating between the program and the hardware of the electronic device 1 to control general operations of the electronic device 1; the virtual device driver 200 for performing functions related to the virtual devices 100a and 100b to create the virtual device 100, share modification, etc.; at least one program and a plurality of system files to other various functions of the electronic device 1, etc.

The storage 405 may be actualized by a nonvolatile memory (i.e. a writable read only memory (ROM)) which retains data even when power supplied to the electronic device 1 is cut off, and reflects changes. In other words, the storage 405 may be actualized by one of a flash memory, an erasable programmable read only memory (EPROM), and an electrically erasable programmable read only memory (EEPROM). The storage 405 may further include a volatile memory such as a dynamic random access memory (DRAM) or a static random access memory (SRAM) in which the reading or writing speed of the electronic device 1 is faster than that in the nonvolatile memory.

The storage area of the storage 405 may include a common area for storing the shared file 300, and a plurality of exclusive areas respectively corresponding to the plurality of virtual devices 100a and 100b to store the exclusive files 301a and 301b. The common area refers to an area to which the plurality of virtual devices 100a and 100b can have an access, and the exclusive area refers to an area to which only the corresponding virtual devices 100a and 100b can have an access. For security, any of the virtual devices 100a and 100b cannot modify the shared file 300. Therefore, the electronic device 1 according to an embodiment of the disclosure keeps the shared file 300 not to be modified.

The controller 407 performs control for operating general elements of the electronic device 1. The controller 407 may include a control program for implementing such control operations, a nonvolatile memory in which the control program is installed, a volatile memory to which the installed control program is at least partially loaded, and at least one microprocessor or central processing unit (CPU) for executing the loaded control program.

The control program may include a program(s) given in the form of at least one among a basic input/output system (BIOS), the virtual device driver 200, the operating system 201, firmware, a platform and an application program. According to an embodiment, the application program may be previously installed or stored in the electronic apparatus 1 when the electronic apparatus 1 is manufactured, or installed in the electronic apparatus 1 based on data of the application program received from the outside in the future when it is used. The data of the application program may for example be downloaded from an external server such as an application market in to the electronic apparatus 1.

The controller 407 creates the virtual devices 100a and 100b by executing the virtual device driver 200, and controls the operations of the virtual devices 100a and 100b through the operating system 201. In more detail, the controller 407 uses the operating system 201 to create an alternative file by copying the shared file 300 when the first virtual device 100a of the virtual devices 100a and 100b makes a request for modifying the shared file 300, and controls the second virtual device 100b, which desires to share the shared file 300 requested to be modified, to refer to the alternative file. The alternative file may be created as an exclusive file 300b corresponding to the second virtual device 100b.

Alternatively, the controller 407 may keep the shared file 300 and additionally store the modified shared file 300 when the first virtual device 100a makes a modification request to the shared file 300. In this embodiment, the second virtual device 100b still refers to the shared file 300, and the first virtual device 100a refers to the modified shared file 300.

In addition, when the shared file 300 is modified by the first virtual device 100a, the controller 407 notifies the second virtual device 100b that the shared file 300 is modified. The second virtual device 100b may selectively refer to the modified shared file 300 or the alternative file. This is because the modification in the shared file 300 by the first virtual device 100a is regarded as updating of the file, when the first virtual device 100a has authority to access and modify the shared file 300.

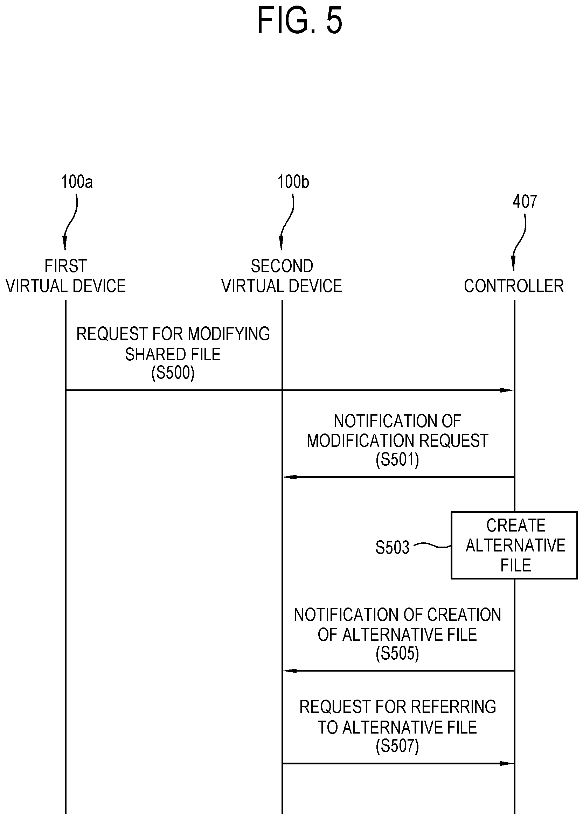

Below, embodiments where the electronic device 1 according to the disclosure protects the shared file 300 will be described with reference to the control flowcharts shown in FIGS. 5-8.

FIG. 5 is a control flowchart of an electronic device according to an embodiment of the disclosure, in which the second virtual device is informed that the modification request is received when it is sensed that the first virtual device makes a request for modifying the shared file, and the alternative file is created so that the second virtual device can refer to the alternative file.

First, at operation S500, the controller 407 receives a request for modifying the shared file 300 from one of the plurality of virtual devices 100a and 100b, e.g. from the first virtual device 100a. At operation S501, the controller 407 notifies the other virtual devices 100a and 100b, e.g. the second virtual device 100b that the request for modifying the shared file 300 is sensed. Then, at operation S503, the controller 407 copies the shared file 300 to create the alternative file. At operation S505, the controller 407 notifies that the alternative file is created, so that the second virtual device 100b which desires to share the shared file 300 can refer to the alternative file. Last, at operation S507, the second virtual device 100b transmits a request for referring to the alternative file to the controller 407 so as to refer to the alternative file. The alternative file may be the exclusive files 301a and 301b created to respectively correspond to the virtual devices 100a and 100b. For example, when the modification is requested in the shared file 300, the controller 407 copies the shared file 300 to create the exclusive files 301a and 301b to respectively correspond to the other virtual devices 100a and 100b which make no requests for modifying the shared file 300.

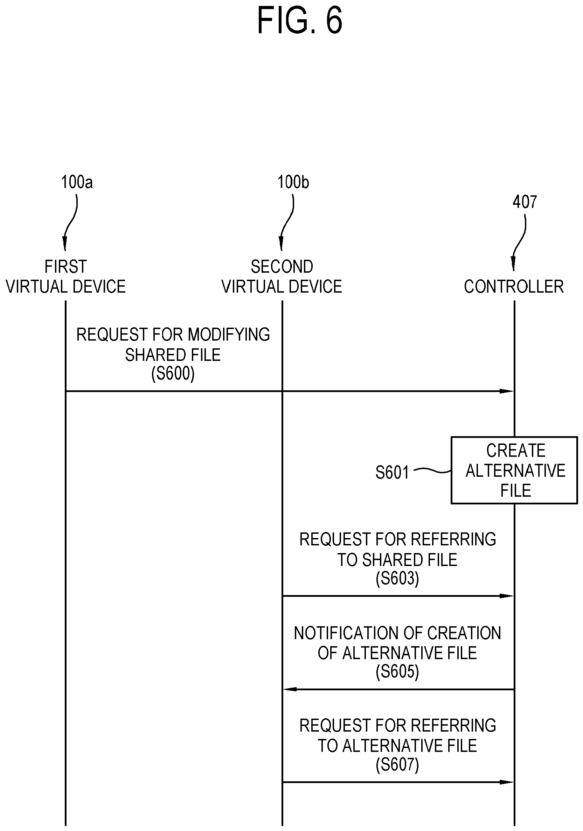

FIG. 6 is a control flowchart of an electronic device according to an embodiment of the disclosure, in which the alternative file is created when it is sensed that the first virtual device makes a request for modifying the shared file, and the second virtual device is informed of the creation of the alternative file to thereby refer to the alternative file when a request for referring to the shared file is received from the second virtual device.

First, at operation S600, the controller 407 receives the request for modifying the shared file 300 from the first virtual device 100a of the plurality of virtual devices 100a and 100b. At operation S601, the controller 407 copies the shared file 300 to create the alternative file. Then, at operation S603, the controller 407 receives the request for referring to the shared file 300 from the second virtual device 100b. At operation S605, the controller 407 notifies the second virtual device 100b of the creation of the alternative file so that the second virtual device 100b can refer to the alternative file. Last, the second virtual device 100b makes the request for referring to the alternative file to the controller 407 on the basis of the notification of the controller 407.

Alternatively, when the controller 407 notifies the second virtual device 100b that the request for modifying the shared file 300 is received from the first virtual device 100a, the second virtual device 100b may make a request for creating the alternative file copied from the shared file 300 to the controller 407. The alternative file created by the request from the second virtual device 100b becomes the exclusive file 300b of the second virtual device 100b.

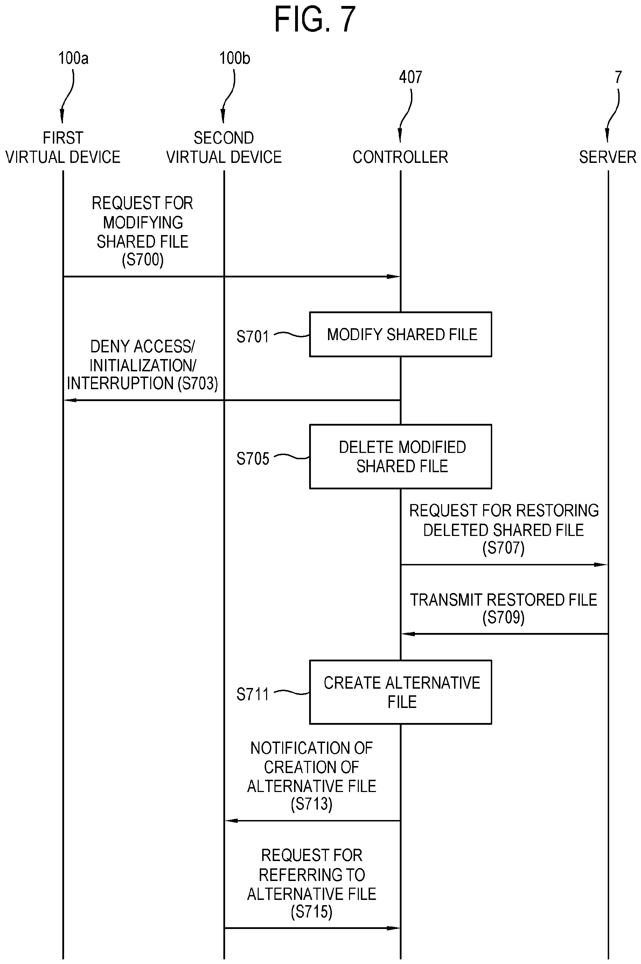

Below, an embodiment of restricting the virtual device 100a, 100b, which makes the request for modifying the shared file 300, when the shared file 300 is modified, deleting the modified shared file 300, and restoring the shared file 300 through communication with the outside will be described with reference to FIG. 7.

First, at operation S700, the controller 407 receives the request for modifying the shared file 300 from the first virtual device 100a among the plurality of first virtual devices 100a. Then, at operation S701, the controller 407 modifies the shared file 300 subjected to the modification request. Then, at operation S703, the controller 407 denies an access of the first virtual device 100a, which makes the request for modifying the shared file 300, to another shared file 300, initializes the first virtual device 100a or interrupts the first virtual device 100a. At operation S705, the controller 407 deletes the modified shared file 300. Then, the controller 407 makes a request for restoring the deleted shared file 300 to a server 7 through the communicator 408. At operation S709, the controller 407 receives a restoration file from the server 7. At operation S711, the controller 407 creates the alternative file based on the received restoration file. At operation S713, the controller 407 notifies the other virtual devices 100a and 100b, e.g. the second virtual device 100b of the creation of the alternative file so that the second virtual device 100b can refer to the alternative file. The second virtual device 100b transmits the request for referring to the alternative file to the controller 407 based on the notification of the controller 407.

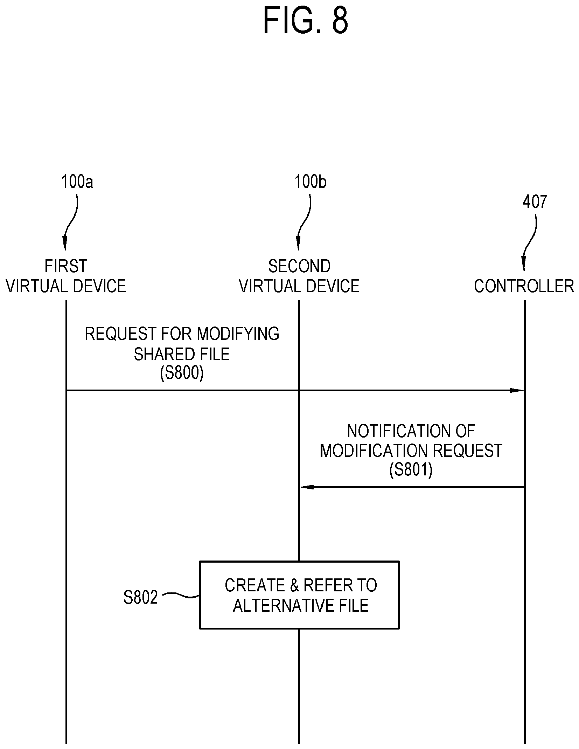

FIG. 8 illustrates an example that the second virtual device creates and stores the alternative file according to an embodiment of the disclosure. First, at operation S800, the controller 407 receives the request for modifying the shared file 300 from the first virtual device 100a. Then, at operation S801, the controller 407 notifies the second virtual device 100b that the request for modifying the shared file 300 is received. Last, the second virtual device 100b creates and stores the exclusive files 301a and 301b corresponding to the second virtual device 100b, i.e. the alternative file by copying the shared file 300 on the basis of the notification of the controller 407, and refers to the stored alternative file.

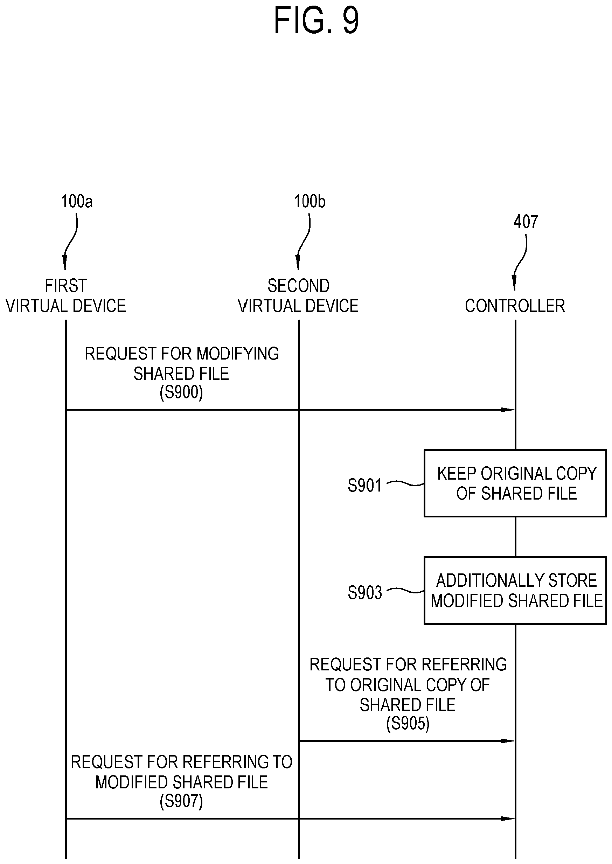

FIG. 9 illustrates an example of keeping an original copy of the shared file and additionally storing the modified shared file according to an embodiment of the disclosure. First, at operation S900, the controller 407 receives the request for modifying the shared file 300 from the first virtual device 100a. Further, at operation S901, the controller 407 maintains the original copy of the shared file. Then, at operation S903, the controller 407 additionally stores the modified shared file in the storage 405 in response to a request from the first virtual device 100a. Further, at operation S905, a request for referring to the original copy of the shared file 300 is received from the second virtual device 100b. Last, at operation S907, a request for referring to the modified shared file 300 is received from the first virtual device 100a. In other words, the first virtual device 100a involved in the modification of the shared file 300 is made to refer to the modified shared file 300, and the second virtual device 100b uninvolved in the modification of the shared file 300 still refers to the shared file 300.

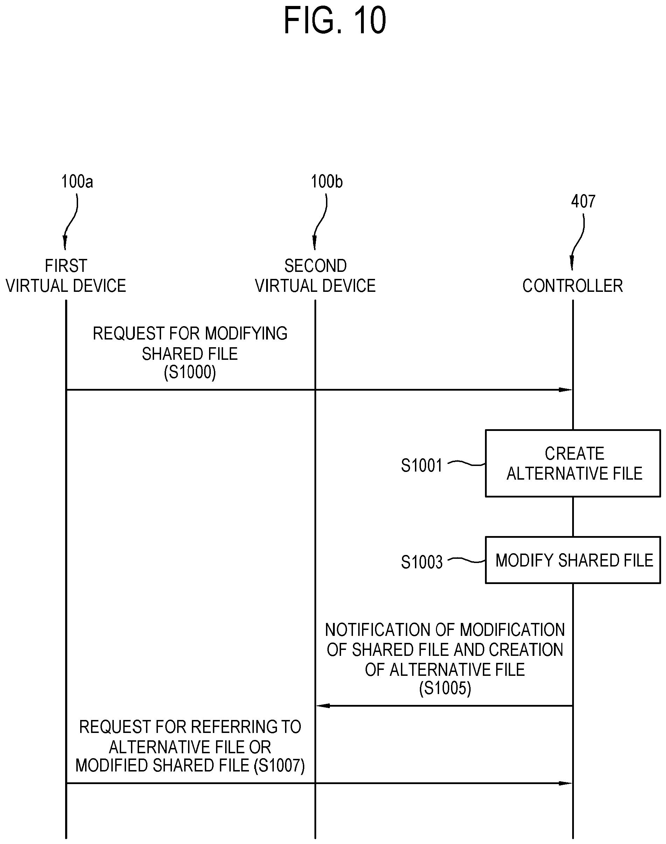

FIG. 10 illustrates an example that the second virtual device selectively refers to the modified shared file or the alternative file, when the shared file is modified, according to an embodiment of the disclosure. First, at operation S1000, the controller 407 receives the request for modifying the shared file 300 from the first virtual device 100a. Then, at operation S1001, the controller 407 copies the shared file 300 to create the alternative file. Further, at operation S1003, the controller 407 modifies the shared file 300 based on the modification request of the first virtual device 100a. Then, at operation S1005, the controller 407 notifies the second virtual device 100b of the modification of the shared file 300 and the creation of the alternative file. In this case, the controller 407 may transmit information about the first virtual device 100a which makes the request for modifying the shared file 300, the shared file 300 subjected to the modification request, and the alternative file, address information for referring to the modified shared file 300 and the alternative file, etc. to the second virtual device 100b. Last, at operation S1007, the second virtual device 100b makes a request for selectively referring to the created alternative file or the modified shared file 300 to the controller 407. The second virtual device 100b determines whether the shared file 300 is modified by the virtual device 100a having modification authority on the basis of information received from the controller 407, and selectively refers to the modified shared file 300 or the alternative file on the basis of the determination. When all the virtual devices 100a and 100b make selection to refer to the modified shared file 300, the controller 407 may delete the created alternative file or may not create the alternative file.

## Claims

1. An electronic device (1) comprising:
a storage (405) configured to store a shared file shared between a plurality of virtual devices; and
a controller (407) configured to:
create an alternative file by copying the shared file when a first virtual device of the plurality of virtual devices makes a request for modifying the shared file,
modify the shared file based on the modification request of the first virtual device;
wherein
the controller (407) is further configured to:
notify a second virtual device of the modification of the shared file and the creation of the alternative file, including transmitting information about the first virtual device which makes the request for modifying the shared file, the shared file subjected to the modification request, the alternative file, and address information for referring to the modified shared file and the alternative file, to the second virtual device;
receive a selection from the second virtual device for selectively referring to the created alternative file or the modified shared file, wherein the second virtual device is configured to determine whether the shared file is modified by the first virtual device having modification authority on the basis of the information received from the controller, and to selectively refer to the modified shared file or the alternative file on the basis of the determination.

2. The electronic device according to claim 1, wherein the alternative file is an exclusive file for the second virtual device.

3. The electronic device according to claim 1, wherein the controller (407) is configured to perform at least one of denying an access of the first virtual device to another shared file, interrupting the first virtual device, or initializing the first virtual device, when the shared file is modified by the first virtual device.

4. The electronic device according to claim 1, further comprising a communicator (408), wherein the controller (407) is configured to make a request for restoring the modified shared file to an outside through the communicator, and creates the alternative file based on a restoration file received from the outside in response to the request, when the shared file is modified.

5. A method of controlling an electronic device, the method comprising:
storing a shared file shared between a plurality of virtual devices;
creating (S1001) an alternative file by copying the shared file when a first virtual device of the plurality of virtual devices makes a request for modifying the shared file;
modifying (S1003) the shared file based on the modification request of the first virtual device;
notifying (S1005) a second virtual device of the modification of the shared file and the creation of the alternative file, including transmitting information about the first virtual device which makes the request for modifying the shared file, the shared file subjected to the modification request, the alternative file, and address information for referring to the modified shared file and the alternative file, to the second virtual device;
receiving (S1007) a selection from the second virtual device for selectively referring to the created alternative file or the modified shared file, wherein the second virtual device is configured to determine whether the shared file is modified by the first virtual device having modification authority on the basis of the information received from the controller, and to selectively refer to the modified shared file or the alternative file on the basis of the determination.

6. The method according to claim 5, wherein the alternative file is an exclusive file for the second virtual device.

7. The method according to claim 5, further comprising performing at least one of denying an access of the first virtual device to another shared file, interrupting the first virtual device, or initializing the first virtual device, when the shared file is modified by the first virtual device.

8. The method according to claim 5, further comprising:
making a request for restoring the modified shared file to an outside when the shared file is modified by the first virtual device; and
creating the alternative file based on a restoration file received from the outside in response to the request.

## Patentansprüche

1. Elektronische Vorrichtung (1), umfassend:
eine Speicherung (405), die konfiguriert ist, eine gemeinsame Datei zu speichern, die von einer Vielzahl virtueller Vorrichtungen gemeinsam genutzt wird; und
eine Steuerung (407), die konfiguriert ist zum:
Erstellen einer alternativen Datei durch Kopieren der gemeinsamen Datei, wenn eine erste virtuelle Vorrichtung aus der Vielzahl virtueller Vorrichtungen eine Anfrage zum Modifizieren der gemeinsamen Datei stellt,
Modifizieren der gemeinsamen Datei basierend auf der Modifikationsanfrage der ersten virtuellen Vorrichtung; wobei
die Steuerung (407) ferner konfiguriert ist zum:
Benachrichtigen einer zweiten virtuellen Vorrichtung über das Modifizieren der gemeinsamen Datei und das Erstellen der alternativen Datei, einschließend das Übertragen von Informationen über die erste virtuelle Vorrichtung, die die Anfrage zum Modifizieren der gemeinsamen Datei stellt, die gemeinsame Datei, die der Modifikationsanfrage unterzogen wird, die alternative Datei und Adressinformationen zur Bezugnahme auf die modifizierte gemeinsame Datei und die alternative Datei, an die zweite virtuelle Vorrichtung;
Empfangen einer Auswahl von der zweiten virtuellen Vorrichtung zur selektiven Bezugnahme auf die erstellte alternative Datei oder die modifizierte gemeinsame Datei, wobei die zweite virtuelle Vorrichtung zum Bestimmen, ob die gemeinsame Datei durch die erste virtuelle Vorrichtung, die eine Modifikationsberechtigung aufweist, modifiziert wurde, auf der Grundlage der von der Steuerung empfangenen Informationen konfiguriert ist, und zur selektiven Bezugnahme auf die modifizierte gemeinsame Datei oder die alternative Datei auf der Grundlage der Bestimmung.

2. Elektronische Vorrichtung nach Anspruch 1, wobei die alternative Datei eine exklusive Datei für die zweite virtuelle Vorrichtung ist.

3. Elektronische Vorrichtung nach Anspruch 1, wobei die Steuerung (407) zum Durchführen von mindestens einem vom Ablehnen eines Zugriffs der ersten virtuellen Vorrichtung auf eine andere gemeinsame Datei, Unterbrechen der ersten virtuellen Vorrichtung oder Initialisieren der ersten virtuellen Vorrichtung konfiguriert ist, wenn die gemeinsame Datei durch die erste virtuelle Vorrichtung modifiziert wird.

4. Elektronische Vorrichtung nach Anspruch 1, ferner umfassend einen Kommunikator (408), wobei die Steuerung (407) zum Stellen einer Anfrage zum Wiederherstellen der modifizierten gemeinsamen Datei nach außen über den Kommunikator konfiguriert ist und die alternative Datei basierend auf einer von außen empfangenen Wiederherstellungsdatei als Antwort auf die Anfrage erstellt, wenn die gemeinsame Datei modifiziert wird.

5. Verfahren zum Steuern einer elektronischen Vorrichtung, das Verfahren umfassend:
Speichern einer gemeinsamen Datei, die von einer Vielzahl virtueller Vorrichtungen gemeinsam genutzt wird;
Erstellen (S1001) einer alternativen Datei durch Kopieren der gemeinsamen Datei, wenn eine erste virtuelle Vorrichtung aus der Vielzahl virtueller Vorrichtungen eine Anfrage zum Modifizieren der gemeinsamen Datei stellt;
Modifizieren (S1003) der gemeinsamen Datei basierend auf der Modifikationsanfrage der ersten virtuellen Vorrichtung;
Benachrichtigen (S1005) einer zweiten virtuellen Vorrichtung über das Modifizieren der gemeinsamen Datei und das Erstellen der alternativen Datei, einschließend das Übertragen von Informationen über die erste virtuelle Vorrichtung, die die Anfrage zum Modifizieren der gemeinsamen Datei stellt, die gemeinsame Datei, die der Modifikationsanfrage unterzogen wird, die alternative Datei und Adressinformationen zur Bezugnahme auf die modifizierte gemeinsame Datei und die alternative Datei, an die zweite virtuelle Vorrichtung;
Empfangen (S1007) einer Auswahl von der zweiten virtuellen Vorrichtung zur selektiven Bezugnahme auf die erstellte alternative Datei oder die modifizierte gemeinsame Datei, wobei die zweite virtuelle Vorrichtung zum Bestimmen, ob die gemeinsame Datei durch die erste virtuelle Vorrichtung, die eine Modifikationsberechtigung aufweist, modifiziert wurde, auf der Grundlage der von der Steuerung empfangenen Informationen konfiguriert ist, und zur selektiven Bezugnahme auf die modifizierte gemeinsame Datei oder die alternative Datei auf der Grundlage der Bestimmung.

6. Verfahren nach Anspruch 5, wobei die alternative Datei eine exklusive Datei für die zweite virtuelle Vorrichtung ist.

7. Verfahren nach Anspruch 5, ferner umfassend das Durchführen von mindestens einem vom Ablehnen eines Zugriffs der ersten virtuellen Vorrichtung auf eine andere gemeinsame Datei, Unterbrechen der ersten virtuellen Vorrichtung oder Initialisieren der ersten virtuellen Vorrichtung, wenn die gemeinsame Datei durch die erste virtuelle Vorrichtung modifiziert wird.

8. Verfahren nach Anspruch 5, ferner umfassend:
Stellen einer Anfrage zum Wiederherstellen der modifizierten gemeinsamen Datei nach außen, wenn die gemeinsame Datei durch die erste virtuelle Vorrichtung modifiziert wird; und
Erstellen der alternativen Datei basierend auf einer von außen empfangenen Wiederherstellungsdatei als Antwort auf die Anfrage.

## Revendications

1. Dispositif électronique (1) comprenant :
un stockage (405) configuré pour stocker un fichier partagé qui est partagé entre une pluralité de dispositifs virtuels ; et
un dispositif de commande (407) configuré pour :
créer un fichier alternatif en copiant le fichier partagé lorsqu'un premier dispositif virtuel de la pluralité de dispositifs virtuels fait une demande de modification du fichier partagé,
modifier le fichier partagé sur la base de la demande de modification du premier dispositif virtuel ;
dans lequel
le dispositif de commande (407) est en outre configuré pour :
notifier à un second dispositif virtuel la modification du fichier partagé et la création du fichier alternatif, y compris la transmission d'informations sur le premier dispositif virtuel qui fait la demande de modification du fichier partagé, le fichier partagé soumis à la demande de modification, le fichier alternatif et d'informations d'adresse pour faire référence au fichier partagé modifié et au fichier alternatif, au second dispositif virtuel ;
recevoir une sélection du second dispositif virtuel pour faire référence de manière sélective au fichier alternatif créé ou au fichier partagé modifié, dans lequel le second dispositif virtuel est configuré pour déterminer si le fichier partagé est modifié par le premier dispositif virtuel ayant l'autorité de modification sur la base des informations reçues du dispositif de commande, et pour faire référence de manière sélective au fichier partagé modifié ou au fichier alternatif sur la base de la détermination.

2. Dispositif électronique selon la revendication 1, dans lequel le fichier alternatif est un fichier exclusif pour le second dispositif virtuel.

3. Dispositif électronique selon la revendication 1, dans lequel le dispositif de commande (407) est configuré pour exécuter au moins l'un du refus de l'accès du premier dispositif virtuel à un autre fichier partagé, de l'interruption du premier dispositif virtuel ou de l'initialisation du premier dispositif virtuel, lorsque le fichier partagé est modifié par le premier dispositif virtuel.

4. Dispositif électronique selon la revendication 1, comprenant en outre un communicateur (408), dans lequel
le dispositif de commande (407) est configuré pour faire une demande de restauration du fichier partagé modifié vers l'extérieur à travers le communicateur, et crée le fichier alternatif sur la base d'un fichier de restauration reçu de l'extérieur en réponse à la demande, lorsque le fichier partagé est modifié.

5. Procédé de commande d'un dispositif électronique, le procédé comprenant :
le stockage d'un fichier partagé qui est partagé entre une pluralité de dispositifs virtuels ;
la création (S1001) d'un fichier alternatif en copiant le fichier partagé lorsqu'un premier dispositif virtuel de la pluralité de dispositifs virtuels fait une demande de modification du fichier partagé ;
la modification (S1003) du fichier partagé sur la base de la demande de modification du premier dispositif virtuel ;
la notification (S1005) à un second dispositif virtuel de la modification du fichier partagé et de la création du fichier alternatif, y compris la transmission d'informations sur le premier dispositif virtuel qui fait la demande de modification du fichier partagé, le fichier partagé soumis à la demande de modification, le fichier alternatif et d'informations d'adresse pour faire référence au fichier partagé modifié et au fichier alternatif, au second dispositif virtuel ;
la réception (S1007) d'une sélection du second dispositif virtuel pour faire référence de manière sélective au fichier alternatif créé ou au fichier partagé modifié, dans lequel le second dispositif virtuel est configuré pour déterminer si le fichier partagé est modifié par le premier dispositif virtuel ayant l'autorité de modification sur la base des informations reçues du dispositif de commande, et pour faire référence de manière sélective au fichier partagé modifié ou au fichier alternatif sur la base de la détermination.

6. Procédé selon la revendication 5, dans lequel le fichier alternatif est un fichier exclusif pour le second dispositif virtuel.

7. Procédé selon la revendication 5, comprenant en outre l'exécution d'au moins l'un du refus de l'accès du premier dispositif virtuel à un autre fichier partagé, de l'interruption du premier dispositif virtuel ou de l'initialisation du premier dispositif virtuel, lorsque le fichier partagé est modifié par le premier dispositif virtuel.

8. Procédé selon la revendication 5, comprenant en outre :
le fait de faire une demande de restauration du fichier partagé modifié vers l'extérieur lorsque le fichier partagé est modifié par le premier dispositif virtuel ; et
la création du fichier alternatif sur la base d'un fichier de restauration reçu de l'extérieur en réponse à la demande.
